# EUROPÄISCHE PATENTSCHRIFT

(11) **EP 1 646 795 B1**
(45) Veröffentlichungstag und Bekanntmachung des Hinweises auf die Patenterteilung: **08.04.2009**
(21) Anmeldenummer: 04740439.7
(22) Anmeldetag: 30.06.2004
(51) Int. Cl.: F16C 39/06

(54) **MAGNETISCHES LAGERELEMENT**
MAGNETIC BEARING ELEMENT
ELEMENT DE SUPPORT MAGNETIQUE

(30) Priorität: 23.07.2003 DE 10333733
(43) Veröffentlichungstag der Anmeldung: 19.04.2006
(73) Patentinhaber: Forschungszentrum Jülich GmbH, 52425 Jülich (DE)
(72) Erfinder: FREMEREY, Johan, 53127 Bonn (DE)
(74) Vertreter: Paul, Dieter-Alfred
(86) Internationale Anmeldenummer: PCT/EP2004/007054
(87) Internationale Veröffentlichungsnummer: WO 2005/019670

(56) Entgegenhaltungen:
- EP-A- 0 728 956
- WO-A-97/09664
- US-A- 4 668 885
- US-A- 5 126 610
- US-A- 5 710 469

## Beschreibung

Die Erfindung betrifft ein magnetisches Lagerelement mit wenigstens einem ringförmigen Permanentmagneten, der von einer ringförmigen Bandage umgeben ist.

Derartige magnetische Lagerelemente für Magnetlagerungen sind bekannt. Das Dokument DE 38 08 331 A2 offenbart ein Magnetlager, welches zwei in sich geschlossene Lagerkomponenten, ein Stabilisierungslager und ein Schwerpunktlager, aufweist. Diese berührungslose Lagerung wird durch ringförmige Permanentmagnete und zumindest einen weiteren Satz von Magnetringen, die einen gegenüber dem ersten Satz entgegengesetzte axiale Magnetisierung aufweisen, erreicht. Derartige Lagerungen werden vorwiegend in Maschinen, die bei sehr hohen Drehzahlen betrieben werden, wie beispielsweise Turbomolekularpumpen oder Schwungrädern, eingesetzt.

Um zu verhindern, daß sich die ringförmigen Permanentmagnete des Stabilisierungslagers infolge der bei hohen Drehzahlen auftretenden großen Zentrifugalkräfte in einem Maße ausweiten, daß die zwischen den Magneten liegende Fügepassungen verloren gehen, und die Magnete platzen oder sich in axialer Richtung verschieben und von der Nabe lösen, werden bei der Montage der Lagerelemente konzentrische Bandagen aus hochfestem, unmagnetischem Material mit hoher Zugfestigkeit, vorzugsweise aus einem Kohlefaserwerkstoff mit hoher tangentialer Vorspannung, von außen auf die ringförmigen Permanentmagnete aufgezogen. Diese Bandagen üben hohe, nach innen gerichtete, den während des Betriebes auftretenden Zentrifugalkräften entgegenwirkende Radialkräfte auf die ringförmigen Permanentmagnete aus.

Ein erheblicher Nachteil besteht darin, daß ein Großteil der Bandagenvorspannung schon zur Schließung der radialen Fügespalte zwischen den konzentrischen Magneten, sowie zwischen dem innen liegenden Magneten und der Rotornabe benötigt wird. Wegen der bei sehr hoher Drehzahl auftretenden, extrem großen Zentrifugalkräfte können die zulässigen Zugspannungen in der Bandage sowie die zulässige Druckspannung des Magnetmaterials überschritten werden. Folge ist, daß entweder die Bandagen oder die ringförmigen Permanentmagnete zerstört werden.

Aufgabe der Erfindung ist es daher, ein magnetisches Lagerelement bereitzustellen, welches zur Schließung der Fügespalte zwischen den Permanentmagneten eine geringere Vorspannung der Bandagen benötigt.

Diese Aufgabe wird erfindungsgemäß dadurch gelöst, daß der jeweilige Permanentmagnet an wenigstens einer Stelle aufgetrennt und dort beabstandet ist. Durch diese Auftrennung wird die bei einem nicht aufgetrennten Permanentmagneten auftretende tangentiale Stützkraft eliminiert. Der aufgetrennte Permanentmagnet kann dadurch von der Bandage mit einem wesentlich geringeren Druck zur Überwindung der Fügespalte beaufschlagt werden. Folge ist, daß entweder wesentlich größere Zentrifugalkräfte auf den Permanentmagneten wirken können, ohne daß letzterer sich aufweitet und sich von der Nabe löst bzw. sich in axialer Richtung verschiebt, oder die Vorspannung kleiner gewählt werden kann, wodurch die Gefahr des Zerstörens der Bandage bzw. des Magneten verringert wird.

Die notwendige Bandagenvorspannung kann noch kleiner gewählt werden, wenn der Permanentmagnet an mehreren Stellen aufgetrennt und beabstandet ist. Die Auftrennung kann als ein sich radial erstreckender Schlitz ausgebildet sein.

Wenn die aufgetrennten Stellen über dem Umfang des Permamentmagneten gleichmäßig verteilt sind, wird eine homogene Verteilung der durch die Vorspannung der Bandage auf den Permanentmagneten wirkenden Kraft erreicht. Auch werden unzulässige Biegenspannungen in den Magnetringen vermieden.

In an sich bekannter Weise kann das Lagerelement mehrere, konzentrisch zueinander angeordnete Permanentmagnete aufweisen, die sämtlich an wenigstens einer Stelle aufgetrennt und dort beabstandet sind. Auch hier wird die bei ungeschlitzt ausgeführten Permanentmagneten auftretende tangentiale Stützkraft eliminiert. Die zur Herstellung eines festen Druckkontaktes zwischen den Mantelflächen der einzelnen Permanentmagnete notwendige Vorspannung der Bandage kann dadurch geringer gewählt werden.

Bei Anordnung mehrerer konzentrisch zueinander angeordnete Permanentmagnete können die Stellen, an denen die Permanentmagnete aufgetrennt sind, vorteilhaft in Umfangsrichtung zueinander versetzt sein. So wird die Lagerstabilität weiter erhöht, die durch die Vorspannung auf die Magnete wirkende Kraft homogen verteilt und die Montage erleichtert.

Vorteilhafte Ausgestaltungen der Erfindung sind in den Untersprüchen und der folgenden Figurenbeschreibung offenbart.

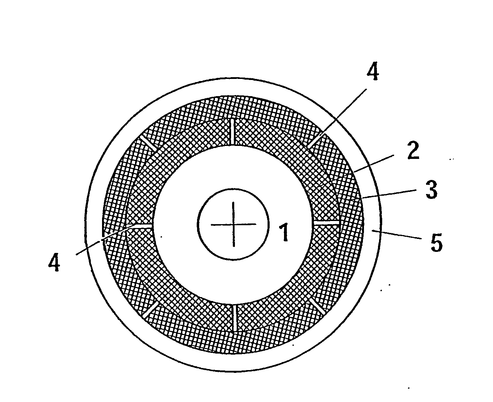

In der Zeichnung ist die Erfindung an Hand eines Ausführungsbeispiels näher veranschaulicht. Sie zeigt einen Querschnitt durch das erfindungsgemäße magnetische Lagerelement. Eine Nabe 1 ist mit einem Ringmagnet 2 umgeben, der um 90° zueinander versetzte, sich radial erstreckende Schlitze 4 aufweist. An diesem in vier Segmente geteilten Ringmagnet 2 schließt sich ein weiterer Ringmagnet 3 an. Letzterer ist ebenfalls durch vier um 90° zueinander versetzte, sich radial erstreckende Schlitze 4 in vier Segmente geteilt. Dabei sind die Schlitze 4 des Ringmagneten 3 gegenüber den Schlitzen 4 des Ringmagneten 2 um 45° versetzt angeordnet. Auf die Ringmagnete 2, 3 und die Nabe 1 ist eine Bandage 5 mit einer Vorspannung aufgezogen, die dafür sorgt, daß die Ringmagnete 2, 3 sowie der Ringmagnet 2 und die Nabe 1 mit radial nach innen gerichteter Kraft aneinanderliegen.

## Patentansprüche

1. Magnetisches Lagerelement mit wenigstens einem Ringförmigen Permanentmagneten (2,3), der von einer ringförmigen Bandage (5) umgeben ist, **dadurch gekennzeichnet, daß** der Permanentmagnet (2,3) an wenigstens einer Stelle (4) aufgetrennt und dort beabstandet ist.

2. Magnetisches Lagerelement nach Anspruch 1, **dadurch gekennzeichnet, daß** die Stelle (4) als ein sich radial erstreckender Schlitz ausgebildet ist.

3. Magnetisches Lagerelement nach Anspruch 1 oder 2, **dadurch gekennzeichnet, daß** der Permanentmagnet (2,3) an mehreren Stellen (4) aufgetrennt und beabstandet ist.

4. Magnetisches Lagerelement nach Anspruch 3, **dadurch gekennzeichnet, daß** die Stellen (4) über dem Umfang des Permanentmagneten (2,3) gleichmäßig verteilt sind.

5. Magnetisches Lagerelement nach Anspruch 1 bis 4, **dadurch gekennzeichnet, daß** das Lagerelement mehrere, konzentrisch zueinander angeordnete Permanentmagneten (2,3) aufweist, die sämtlich an wenigstens einer Stelle (4) aufgetrennt und dort beabstandet sind.

6. Magnetisches Lagerelement nach Anspruch 5, **dadurch gekennzeichnet, daß** die Stellen (4), an denen die Permanentmagnete (2,3) aufgetrennt und dort beabstandet sind, in Umfangsrichtung zueinander versetzt sind.

7. Magnetisches Lagerelement nach einem der vorhergehenden Ansprüche, **dadurch gekennzeichnet, daß** die ringförmige Bandage (5) aus einem Kohlefaserwerkstoff gebildet ist.

## Claims

1. A magnetic bearing element having at least one annular permanent magnet (2, 3) that is surrounded by an annular binding band (5), **characterized in that** the permanent magnet (2, 3) is divided at at least one location (4) and spaced apart there.

2. The magnetic bearing element according to Claim 1, **characterized in that** the location (4) is embodied as a radially extending slit.

3. The magnetic bearing element according to Claim 1 or 2, **characterized in that** the permanent magnet (2, 3) is divided and spaced apart at multiple l o-cations (4).

4. The magnetic bearing element according to Claim 3, **characterized in that** the locations (4) are distributed regularly over the periphery of the permanent magnet (2, 3).

5. The magnetic bearing element according to Claims 1 to 4, **characterized in that** the bearing element comprises multiple permanent magnets (2, 3) a r-ranged concentrically with one another, all of which are divided at at least one location (4) and spaced apart there.

6. The magnetic bearing element according to Claim 5, **characterized in that** the locations (4) at which the permanent magnets (2, 3) are divided and there spaced apart are offset from one another in the circumferential direction.

7. The magnetic bearing element according to any of the foregoing claims, **characterized in that** the annular binding band (5) is made from a carbon-fiber material.

## Revendications

1. Élément de palier magnétique comprenant au moins un aimant permanent annulaire (2, 3) qui est entouré d'un bandage annulaire (5), **caractérisé en ce que** l'aimant permanent (2, 3) comporte une interruption en au moins un emplacement (4) où les parties de l'aimant se trouvent espacées entre elles.

2. Élément de palier magnétique selon la revendication 1, **caractérisé en ce que** l'emplacement (4) est réalisé sous la forme d'une fente s'étendant radialement.

3. Élément de palier magnétique selon la revendication 1 ou 2, **caractérisé en ce que** l'aimant permanent (2, 3) comporte une interruption en plusieurs emplacements (4) où les parties de l'aimant se trouvent espacées entre elles.

4. Élément de palier magnétique selon la revendication 3, **caractérisé en ce que** les emplacements (4) sont uniformément répartis sur la circonférence de l'aimant permanent (2, 3).

5. Élément de palier magnétique selon l'une des revendications 1 à 4, **caractérisé en ce que** l'élément de palier présente plusieurs aimants permanents (2, 3) disposés concentriquement les uns par rapport aux autres, qui comportent tous conjointement une interruption en au moins un emplacement (4) où les parties de l'aimant se trouvent espacées entre elles.

6. Élément de palier magnétique selon la revendication 5, **caractérisé en ce que** les emplacements (4), où les aimants permanents (2, 3) comportent une interruption où les parties de l'aimant se trouvent espacées entre elles, sont décalés les uns par rapport aux autres en direction circonférentielle.

7. Élément de palier magnétique selon l'une des revendications précédentes, **caractérisé en ce que** le bandage annulaire (5) est réalisé en un matériau à base de fibres de carbone.
